(19) Europäisches Patentamt
European Patent Office
Office européen des brevets

(11) **EP 1 559 898 B1**

(12) **EUROPEAN PATENT SPECIFICATION**

(45) Date of publication and mention
of the grant of the patent:
**10.10.2007 Bulletin 2007/41**

(51) Int Cl.:
*F02D 41/34* (2006.01)  *F02D 41/14* (2006.01)
*G01M 15/00* (2006.01)  *G06F 17/17* (2006.01)

(21) Application number: **04002122.2**

(22) Date of filing: **31.01.2004**

(54) **Method for determining the variation of engine speed**

Verfahren zur Bestimmung von Drehzahlschwankungen eines Motors

Procédé pour la determination des variations du régime d'un moteur

(84) Designated Contracting States:
**DE GB SE**

(43) Date of publication of application:
**03.08.2005 Bulletin 2005/31**

(73) Proprietor: **Ford Global Technologies, LLC**
**Dearborn, MI 48126 (US)**

(72) Inventor: **Stotsky, Alexander**
**42252 Hisings Backa (SE)**

(74) Representative: **Ekström, Nils**
**Albihns Göteborg AB**
**P.O. Box 142**
**401 22 Göteborg (SE)**

(56) References cited:
**DE-A- 10 123 022**  **US-A- 4 274 142**

- **FUCHS E ET AL: "Fast least-squares polynomial approximation in moving time windows" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, 21 April 1997 (1997-04-21), pages 1965-1968, XP010226530 ISBN: 0-8186-7919-0**
- **DIOP S ET AL: "Interpolation And Numerical Differentiation For Observer Design" PROCEEDINGS OF THE AMERICAN CONTROL CONFERENCE, BALTIMORE, MARYLAND, vol. 2, 29 June 1994 (1994-06-29), pages 1329-1333, XP010304362**

**Description**

TECHNICAL FIELD

The invention relates to methods for determining the variation of engine speed from sampled measurement data, in particular crank angle positions given by a crank angle sensor. The invention furthermore relates to methods for determination of the variation of the engine speed, where a polynomial described by a set of model coefficient is adapted to said measurement data. The polynomial is used to describe the variation of the engine speed. In particular the invention relates to a method for determining the variation of the engine speed by use of a trigonometric polynomial.

BACKGROUND ART

New legislative requirements for the exhaust gas emissions regulations imposed recently by the State of California and the Environmental Protection Agency demand the ability to conduct continuous monitoring of the engine torque, misfires, the state of CPS (Cam Profile Switching System) and some other variables. Several methods for the misfire diagnostics (US5,862,507, and references therein), engine torque monitoring (US 2003/0167118 A1; US 6,029,109; US 6,223,120; US 6,234,010 and references therein), CPS monitoring (US 6,006,152) are based on the speed fluctuation data obtained from a high resolution engine speed signal. This, in its turn, requires good quality of the high resolution engine speed signal. On the other hand, increasing demands for the requested engine torque and drivablity of new production vehicles require more powerful multicylinder engines. Production engines with increased number of the cylinders require better quality of a crankshaft measurement system, which calculates the high resolution engine speed signal.
As a rule, the elapsed time for two teeth passed a fixed point is measured in production engines. High resolution engine speed signal is then calculated via the elapsed time by using a first difference method. The combustion amplitude is distinguishable on the high resolution engine speed signal if a minimum of four points are measured for each combustion event. The high resolution engine speed signal is sampled on the basis of a Crank Angle (CA) with the step $\Delta$, namely,

$$(1) \qquad \Delta = \frac{L_c}{n_p N} \ ,$$

where $\Delta$ is the discretization step (CA degrees), N is the number of the cylinders of the engine, $n_p$ is the number of points measured for each combustion event ($n_p \geq 4$), $L_c$ is the length of the engine cycle in CA degrees (as a rule, $L_c = 720°$). Since an engine crankshaft is usually provided with 58 teeth and a gap corresponding to two missing teeth, the step $\Delta$ should be a multiple of $6°$. Then, for eight cylinder engines the discretization step corresponding to five points per combustion is $18°$, that is two times less than the discretization step corresponding to four points per each combustion event in the case of five cylinder engines. Reduction of the discretization step leads to a higher processor load and it causes time interval errors at high engine speeds. A passage time between two subsequent teeth becomes less, as the rotational speed rises, thereby time interval errors rise that, in its turn, leads to errors in the high resolution engine speed signal at high rotational speeds. Moreover, low frequency oscillations from the powertrain and high frequency oscillations due to crankshaft torsion, together with vibrations induced by the road, act as disturbances on the crankshaft.
In DE 101 23 022 a method for detecting a rotational speed of an internal combustion engine which exhibits periodic speed oscillations is disclosed. The method comprises the steps of:

scanning a sector wheel connected to the crankshaft at a scanning location; determining a time taken for a sector having a sector size to pass the scanning location;
retrieving operating-parameter-dependent correction factors from a characteristic map, the operating-parameter-dependent correction factors being development coefficients for modelling the periodic speed oscillations which occur during operation of the internal combustion engine, wherein the operating-parameter-dependent correction factors are development coefficients of a Fourier series; and
correcting the determined time by determining a corrective adjustment for the periodic speed oscillations using the operating-parameter-specific correction factors and obtaining a corrected time using the determined time and the corrective adjustment. The periodic speed oscillation is stimulated by a Fourier synthesis. The simulation however requires the internal combustion engine to have been measured beforehand on a test bed, the periodic curve of the oscillation being recorded for as many operating parameters or operating points of the internal combustion engine as possible and being converted into corresponding synthesis coefficients.

A number of misfire detection techniques is based on identification of the crankshaft disturbances (US 5,734,100; US 5,906,652). The engine behaviour is learned during the fuel cutoff state and compensated when the engine is fuelled. However, the changes in the engine speed due to the unpredictable stochastic external interference or even misfire may occur in the fuel cutoff state. If a misfire is learned during the learning process then it would be compensated in the engine fuelled behaviour and therefore leads to the deterioration of the learning accuracy. Moreover, these compensation schemes do not correct for the crankshaft vibrations when the engine is fuelled and require significant calibration efforts for different vehicle operating conditions.

A number of torque estimation techniques known in the literature, (see for example, US 5,771,482; US 6,223,120, etc.) recognizes the crankshaft as a flexible body. Model inversion techniques (input observers) are employed for estimation of system inputs (torques acting on each crank throw) via system outputs (angular response measurements). In multicylinder engines, where the number of the cylinders is greater than the number of angular response measurements locations, the number of unknown system inputs is greater than the number of known outputs. Pseudoinverse techniques applied to the case of the system input estimation do not give accurate solution for cylinder individual torques. A number of misfire detection approaches known in the literature analyzes engine firing frequency through a Discrete Fourier Transform (DFT) (see for example, Ginoux S., Champoussin J.C. Engine Torque Determination by Crankangle Measurements: State of the Art, Future Prospects , Electronic Engine Controls, 1997, pages 1236 - (1997), US 5,771,482; US 6,223,120, 2003/0167118 A1). The Fourier Series coefficients which represent continuous time integral functions, are approximated via discrete sums, provided that the sampling interval is properly chosen. Many misfire diagnostic functions utilize low rate sampling of the engine crankshaft speed. Typically, the crankshaft speed is sampled once per cylinder firing event. At such a low rate sampling, the error between continuous time Fourier coefficients and their discrete time approximations could be sufficiently large, that in its turn leads to the signal quality deterioration. Moreover, high order harmonic components of the engine firing frequency, which often contain valuable misfire (combustion quality) information for higher engine speeds, frequently are folded back or aliased, within the range of lower noise-related engine frequencies. These aliased signals may cause misinterpretation of the cylinder firing event data. In addition, the DFT approach is typically considered to be computationally complex in industry and therefore was not feasible for the on-board real-time estimation. These facts necessitate development of new computationally efficient recursive algorithms which are able to isolate the combustion frequency component from the engine speed signal in real time engine control applications.

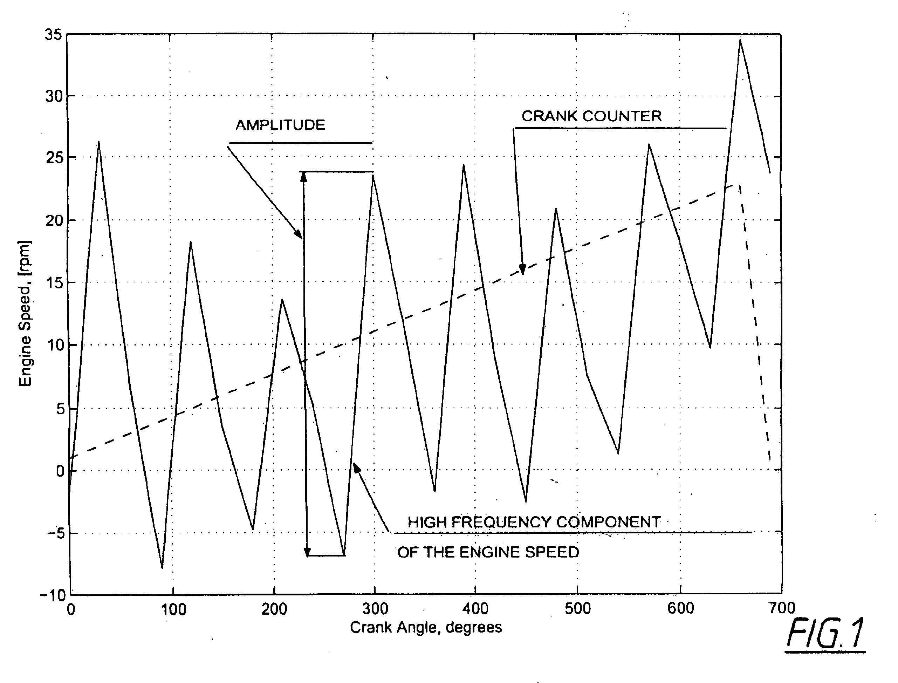

A single engine cycle is given for eight cylinder engine operating at 1800 rpm in the Figure 1. Eight combustions are clearly recognizable in the high frequency component of the engine speed. Here and below, under the term "high frequency component " of the engine speed, the periodic oscillations in the engine speed corresponding to the combustion events are understood. The combustion state of a given cylinder is defined via the amplitude, which in its turn, is defined as the difference between minimal and maximal values, respectively, for a single cylinder, with the power stroke occurred in the interval. The corresponding amplitude is used for estimation of engine torque and detection of a misfire. The high frequency component of the engine speed for eight cylinder engine is plotted with the solid line. The Crank Counter is plotted with dotted line.

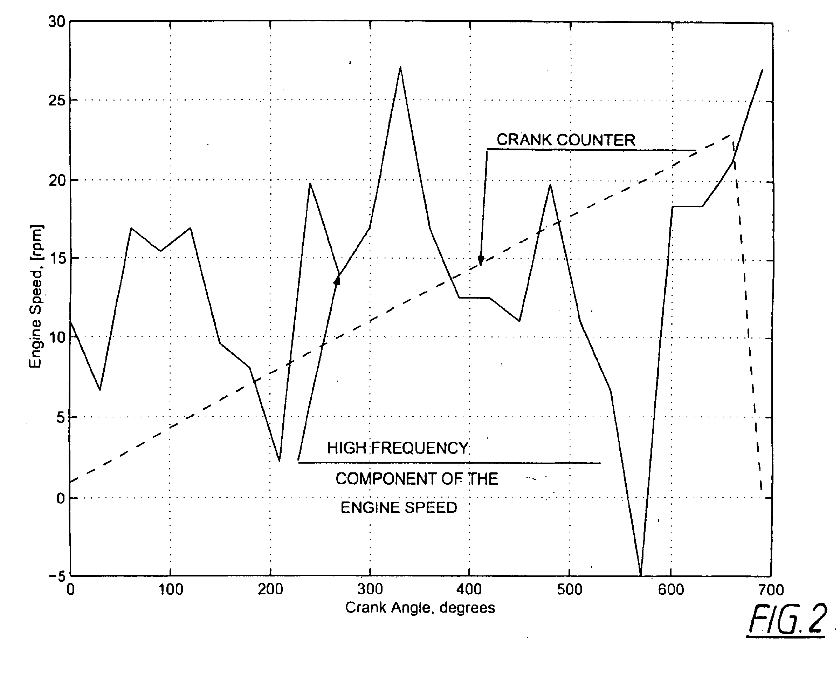

A single engine cycle is shown for eight cylinder engine operating at 5400 rpm in the Figure 2. Eight combustions are not recognizable at this cycle. Instead, the high frequency component of the engine speed includes fluctuations, which occur as a consequence of the combustion process contaminated with the time interval errors, low frequency oscillations from the powertrain and high frequency oscillations due to the crankshaft torsion. The high frequency component of the engine speed is plotted with the solid line. The Crank Counter is plotted with dotted line.

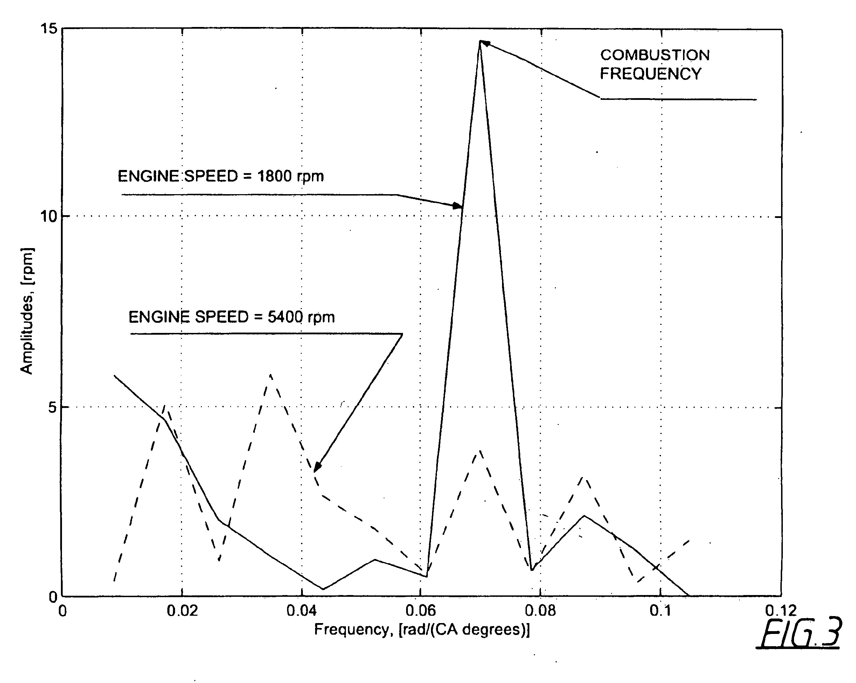

Figure 3 shows the frequency distributions at engine speeds 1800 rpm and 5400 rpm. The combustion frequency is defined as

$$q_c = \frac{N\pi}{360}, [\frac{rad}{CA\, degrees}],$$

where N is the number of the engine cylinders. It is easy to see that at low engine speeds the combustion frequency is dominated, while at high engine speeds the combustion process is contaminated by both low and high frequency noise. At high engine speeds the high frequency oscillations due to the crankshaft twist and low frequency oscillations from the powertrain could be greater than the oscillations due to combustion events. The figure shows the amplitudes of the frequencies at engine speeds 1800 rpm and 5400 rpm. The amplitudes at 1800 rpm are plotted with solid line and the amplitudes at 5400 rpm are plotted with the dashed line.

The facts described above necessitate development of computationally efficient algorithms to recover the engine speed fluctuations corresponding to the combustion process from noise contaminated measurements.

DISCLOSURE OF INVENTION

It is thus an object of the invention to provide computationally efficient algorithms to recover the engine speed fluctuations corresponding to the combustion process from noise contaminated measurements.

Two approaches are considered. The first one is based on the trigonometric interpolation of measured engine speed data in the least squares sense. In application the idea of certain size window moving in time (see Diop S., Grizzle J., Moraal P.,Stefanopoulou A. Interpolation and Numerical Differentiation for Observer Design, Proc. American Control Conference}, Baltimore, Maryland, p.p. 1329 - 1333 (1999)) to numerical differentiation by using polynomial of a certain order, the trigonometric polynomial is fitted here to the measured data in the least-squares sense. Trigonometric interpolation is fairly suitable for the engine speed approximation due to the periodic nature both of engine rotational dynamics and combustion forces as functions of a crank angle. The trigonometric polynomial uses the combustion frequency, whereas the coefficients of the polynomial are updated recursively into the window which is moving in time (crank angle). The technique provides filtering at the combustion frequency. Applying the idea of the recursive computations to the moving window described by Stotsky A., Forgo A. (2003). Recursive Spline Interoplation Method for Real Time Engine Control Applications, Control Engineering Practice to appear (2003), the computationally efficient recursive algorithms are developed in this case for trigonometric polynomials. Another approach to reconstruct the combustion information from the noise contaminated data is based on the Kacmarz algorithm (Kacmarz S. (1937). Angenäherte Auflosung von Systemen Linearer Gleichungen, { Bulletin Internat Academie Polon. Sci, Lett. Cl. Sci. Math. Nat A.}.). The algorithm provides exact fitting of the trigonometric polynomial to a number of frequencies at every discrete step. The coefficients of the polynomial are updated at every step and the filtering is done at the combustion frequency, thereby all other frequencies, like in the previous case, are considered as disturbances. A Volvo passenger car equipped with V8 engine was used in the experiments. Algorithms are implemented in the Matlab by using measured data.

In a first aspect of the invention as described in the claim 1, a recursive computationally efficient filtering algorithm at the combustion frequency, which is based on fitting of the trigonometric polynomial in the least squares sense to the data into a moving window in terms of the crank angle is defined. In the method as defined in claim 1 a trigonometric polynomial representing the engine speed is assigned. The trigonometric polynomial is based on a set of trigonometric base functions of increasing order, which may include a constant value. The trigonometric base functions are multiplied with a model coefficient. Furthermore a set of measurement date are retrieved in a moving window of size w. The trigonometric polynomial is interpolated to the measurement data in the moving window by determining the model coefficients in least square sense. After having determined the model coefficients at a step the window is moved by entering a new measurement data and rejecting a first measurement data in said window. According to the invention, model coefficients after moving said window are determined by recursive use of model coefficients determined in the step previous to moving the window.

BRIEF DESCRIPTION OF DRAWINGS

Embodiments of the invention will be described in more detail below with references to the appended figures, where:

Fig. 1 shows measurements with the step 30 CA on a single engine cycle for eight cylinder engine operating at 1800 rpm

Fig. 2 shows measurements with the step 30 CA on a single engine cycle is shown for eight cylinder engine operating at 5400 rpm.

Fig. 3 shows the frequency distributions at engine speeds 1800 rpm and 5400 rpm,

Fig. 4 show one step of a moving window where the engine speed is measured for a v8 engine at the step $\Delta = 30°$

Fig. 5 show measurements with the step 30 CA on the V8 engine for a single engine cycle and a filter using four frequencies.

Fig. 6 show measurements with the step 30 CA on the V8 engine. A single engine cycle is plotted and a filter using a single frequency.

Fig. 7 show torque estimation using trigonometric interpolation of the crankshaft angle

Fig. 8 show engine speed estimation using trigonometric interpolation at idle engine speed.

Fig. 9 show the high frequency component of the engine speed for a failed system where the misfire is generated in the third cylinder.

Fig. 10 shows the amplitude of the engine speed for misfiring at every cycle of the third cylinder.

Fig. 11 shows the application of the trigonometric interpolation method for the detection of a misfire at high engine speed.

Fig. 12 shows the amplitude for misfiring at every cycle third cylinder.

Fig. 13 shows the properties of a filter using a Kacmarc updating law

Fig. 14 shows the amplitude of the pulsation of the engine speed for the third cylinder calculated with the help of a filtered signal.

Fig. 15 shows an approximation of the measured signal by the Kacmarz algorithm with four frequencies involved is plotted with plus line.

Fig. 16 shows the amplitude of the speed fluctuations for the third cylinder which is misfiring at every cycle.

Fig. 17 shows in schematic form an internal combustion engine.

Fig. 18 show a valve assembly in which two possible cam modes can be applied.

MODE(S) FOR CARRYING OUT THE INVENTION

The theory and application of the different embodiments of the invention will be described below.

First a general description of the trigonometric interpolation method will be described.

Suppose that there is a set of data $y_1$, l = 1, ... , w measured with the crank angle synchronized by the step $\Delta$,

$$(2) \qquad x_1 = \Delta, \quad x_2 = 2\,\Delta, \,.... , \, x_w = w\,\Delta, \quad \Delta = \frac{360^\circ}{w}$$

Assuming that the number of measurements w is greater than or equal to (2 n + 1), where n is the number of frequencies of the signal, then the trigonometric polynomial is defined as follows:

$$(3) \qquad T_n(x) = a_0 + \sum_{q=1}^{n} a_q \cos(qx) + b_q \sin(qx))$$

Notice, that the frequencies q defined in (3) should include the combustion frequency, and preferably, low powertrain frequencies and high frequencies due to the crankshaft torsion. In other words, two frequency limits are important, when choosing q. Analyzing the influence of a load applied to the engine through the crankshaft, it is possible to identify a low frequency threshold at which the load induces noisy oscillations on the flywheel. On the other hand, the crankshaft vibration analysis gives an upper frequency limit at which the crankshaft is considered as a rigid body. Therefore, q is to be chosen from the interval $\underline{q} \le q \le \overline{q}$, where $\underline{q}, \overline{q}$ are the low and high frequency limits.

Measured data should be approximated by the polynomial (3) in the least squares sense. The error to be minimized at every step is as follows

$$(4) \qquad E = \sum_{l=1}^{w} (y_l - (a_0 + \sum_{q=1}^{n} a_q \cos(qx_l) + b_q \sin(qx_l)))^2$$

Coefficients of the polynomial satisfy the following equations:

$$(5) \qquad wa_0 + \sum_{q=1}^{n}\left(a_q\sum_{l=1}^{w}\cos(qx_l) + b_q\sum_{l=1}^{w}\sin(qx_l)\right) = \sum_{l=1}^{w}y_l$$

$$(6) \qquad a_0\sum_{l=1}^{w}\cos(ix_l) + \sum_{q=1}^{n}\left(a_q\sum_{l=1}^{w}\cos(qx_l)\cos(ix_l) + b_q\sum_{l=1}^{w}\sin(qx_l)\cos(ix_l)\right) \\ = \sum_{l=1}^{w}y_l\cos(ix_l)$$

$$(7) \qquad a_0\sum_{l=1}^{w}\sin(ix_l) + \sum_{q=1}^{n}\left(a_q\sum_{l=1}^{w}\cos(qx_l)\sin(ix_l) + b_q\sum_{l=1}^{w}\sin(qx_l)\sin(ix_l)\right) \\ = \sum_{l=1}^{w}y_l\sin(ix_l)$$

where i = 1,2, ... n. Equation (5) represents $\dfrac{\partial E}{\partial a_0} = 0$, whereas equation (6) represents $\dfrac{\partial E}{\partial a_q} = 0$ and, finally, the

equation (7) represents $\dfrac{\partial E}{\partial b_q} = 0$.

Since the set of points are measured in terms of the crank angle with the constant step size and at the interval [0 , 360˚], then

$$(8) \qquad \sum_{l=1}^{w}\cos(qx_l) = \sum_{l=1}^{w}\sin(qx_l) = 0$$

Further,

$$(9) \qquad \sum_{l=1}^{w}\cos(qx_l)\cos(rx_l) = \frac{1}{2}\sum_{l=1}^{w}\cos(q+r)x_l + \frac{1}{2}\sum_{l=1}^{w}\cos(q-r)x_l$$

$$(10) \qquad \sum_{l=1}^{w}\sin(qx_l)\sin(rx_l) = \frac{1}{2}\sum_{l=1}^{w}\cos(q-r)x_l - \frac{1}{2}\sum_{l=1}^{w}\cos(q+r)x_l$$

The sums in the right hand side of the equations (9),(10) are equal to zero. Similar,

$$(11) \qquad \sum_{l=1}^{w}\cos(qx_l)\sin(rx_l) = \frac{1}{2}\sum_{l=1}^{w}\sin(q+r)x_l + \frac{1}{2}\sum_{l=1}^{w}\sin(q-r)x_l = 0$$

for all q and r, q ≠ r, Finally,

$$(12) \qquad \sum_{l=1}^{w} \cos^2(qx_l) = \frac{1}{2} \sum_{l=1}^{w} (1 + \cos(2qx_l)) = \frac{w}{2}$$

$$(13) \qquad \sum_{l=1}^{w} \sin^2(qx_l) = \frac{1}{2} \sum_{l=1}^{w} (1 - \cos(2qx_l)) = \frac{w}{2}$$

The system (5) - (7) can be written by taking into account (8) - (13) as follows:

$$(14) \qquad a_0 = \frac{1}{w} \sum_{l=1}^{w} y_l$$

$$(15) \qquad a_q = \frac{2}{w} \sum_{l=1}^{w} y_l \cos(ix_l)$$

$$(16) \qquad b_q = \frac{2}{w} \sum_{l=1}^{w} y_l \sin(ix_l)$$

for i = 1, 2,.....,n.

The coefficients (14) - (16) can be derived from the Fourier coefficients for the function y = f(x)

$$(17) \qquad \alpha_0 = \frac{1}{2\pi} \int_0^{2\pi} f(x)dx$$

$$(18) \qquad \alpha_q = \frac{1}{\pi} \int_0^{2\pi} f(x)\cos(qx)dx$$

$$(19) \qquad \beta_q = \frac{1}{\pi} \int_0^{2\pi} f(x)\sin(qx)dx$$

if the integrals (17) - (19) are approximated by corresponding sums.

The main result of this section is formulated below.

A moving window and the use of recursive algorithms will be introduced below:

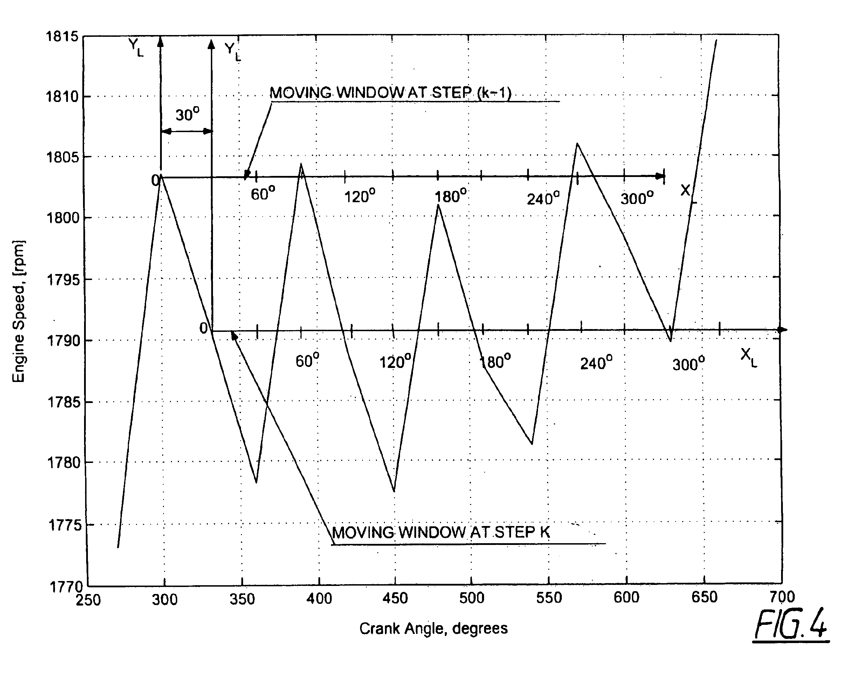

The amount of computations, when computing (14) - (16) can be reduced by introduction of the local fixed coordinates, i.e., moving window of a size w. A similar idea was proposed in spline interpolation method described by Diop et al.(1994), which is based on on-line least-squares polynomial fitting over the window moving in time. The idea of the window moving in time is illustrated in Fig. 4. The window is, in fact, the introduction of the local coordinates $X_L$, $Y_L$. Then, the least squares curve fitting problem is solved in local coordinates and the result is transformed into an original coordinate system. Moreover, the coefficients (14) - (16) in local coordinates can be computed recursively using the information from the previous step. This makes the whole scheme computationally efficient and implementable.

Now, consider one step of the window moving in time. Assume that there is a set of measurements at step k -1

$$(20) \qquad y(1), y(2), y(3), \ldots \ldots y(w)$$

which is measured in the local coordinate system based on the crank angle

$$(21) \qquad 0, \Delta, 2\,\Delta, \ldots \ldots (w-1)\Delta$$

At step k, a new value y(w+1) enters the window while y(1) leaves the window. Hence, at step k there is a set of measurements

$$(22) \qquad y(2), y(3), y(4), \ldots \ldots y(w+1)$$

measured in the local coordinate system

$$(23) \qquad 0, \Delta, 2\,\Delta, \ldots \ldots (w-1)\Delta$$

where $\Delta$ is defined by (1). One step of the moving window is shown in Fig.4, where the engine speed is measured for a V8 engine at the step $\Delta = 30°$. The engine speed is plotted with the solid line. Window of the size w = 12 moving in time is defined in the form of local coordinates $X_L, Y_L$.
The coefficients (14) - (16) at step (k - 1) are defined as follows:

$$(24) \qquad a_{0(k-1)} = \frac{1}{w}\sum_{i=1}^{w} y(i)$$

$$(25) \qquad a_{q(k-1)} = \frac{2}{w}\sum_{i=1}^{w} y(i)\cos((i-1)q\Delta)$$

$$(26) \qquad b_{q(k-1)} = \frac{2}{w}\sum_{i=1}^{w} y(i)\sin((i-1)q\Delta)$$

where q denotes the frequency. The coefficients (14)-(16) at step k are defined as follows,

$$(27) \qquad a_{0k} = \frac{1}{w}\sum_{i=2}^{w+1} y(i)$$

$$(28) \qquad a_{qk} = \frac{2}{w}\sum_{i=2}^{w+1} y(i)\cos((i-2)q\Delta)$$

$$(29) \qquad b_{qk} = \frac{2}{w} \sum_{i=2}^{w+1} y(i) \sin((i-2)q\Delta)$$

Then, the coefficients (27) - (29) are to be expressed via the coefficients (24) - (26)

Calculations give the expression for the first coefficient

$$(30) \qquad a_{ok} = a_{o(k-1)} + \frac{1}{w}(y(w+1) - y(1))$$

which means that the value y(w+1) enters the window while the value y(1) leaves the window.

Starting with $a_{qk}$ one gets:

(31)

$$a_{qk} = \frac{2}{w} \sum_{i=2}^{w+1} y(i) \cos((i-2)q\Delta) = \frac{2}{w} y(w+1) \cos((\cos(w-1)q\Delta)$$

$$+ \frac{2}{w} \sum_{i=2}^{w} y(i) \cos((i-1)q\Delta - q\Delta) =$$

$$\frac{2}{w} y(w+1) \cos((w-1)q\Delta) + \cos(q\Delta)(a_{q(k-1)} - \frac{2}{w} y(1)) + \sin(q\Delta)b_{q(k-1)}$$

(32)

$$b_{qk} = \frac{2}{w} \sum_{i=3}^{w+1} y(i) \sin((i-2)q\Delta) = \frac{2}{w} y(w+1) \sin((w-1)q\Delta)$$

$$+ \frac{2}{w} \sum_{i=3}^{w} y(i) \sin((i-1)q\Delta - q\Delta) =$$

$$\frac{2}{w} y(w+1) \sin((w-1)q\Delta) + \cos(q\Delta)(b_{q(k-1)} - \frac{2}{w} y(2)\sin(q\Delta))$$

$$- \sin(q\Delta)(a_{q(k-1)} - \frac{2}{w}(y(1) + y(2)\cos(q\Delta))$$

The computational burden could be sufficiently reduced by using the recursive formulas (30) - (32).

For later convenience, the equations in the trigonometric interpolation are listed below. The engine speed is approximated according to the following equation

$$(33) \qquad \hat{\omega}_k = a_{0k} + \sum_{q=1}^{n}(a_{qk}\cos(q(w-1)\Delta) + b_{qk}\sin(q(w-1)\Delta)))$$

and the coefficients are updated as follows:

$$(34) \qquad a_{0k} = a_{0(k-1)} - \frac{1}{w}(y(w+1) - y(1))$$

$$(35) \qquad a_{qk} = \frac{2}{w} y(w+1)\cos((w-1)q\Delta) + \cos(q\Delta)(a_{q(k-1)} - \frac{2}{w} y(1))$$
$$+ \sin(q\Delta)b_{q(k-1)}$$

$$(36) \qquad b_{qk} = \frac{2}{w} y(w+1)\sin((w-1)q\Delta) + \cos(q\Delta)(b_{q(k-1)} - \frac{2}{w} y(2)\sin(q\Delta))$$
$$- \sin(q\Delta)(a_{q(k-1)} - \frac{2}{w}(y(1) + y(2)\cos(q\Delta))$$

The value of the interpolating polynomial $\hat{\omega}_k$ is taken at the end of the moving window $(w - 1)\Delta$ ( see Fig.4).

Further in the paper, the trigonometric interpolation is used as a filter at the combustion frequency,i.e.,

$$(37) \qquad \bar{\omega}_k = a_{0k} + a_{ck}\cos(q_c(w-1)\Delta) + b_{ck}\sin(q_c(w-1)\Delta)$$

where $q_c = \dfrac{N\pi}{360}$ is the combustion frequency, N is the number of the engine cylinders. The combustion frequency is the frequency of the signal whose period is $\dfrac{720°}{N}$. The coefficients $a_{0k}$, $a_{ck}$, $b_{ck}$ are computed according to the recursive formulae (34) - (36).

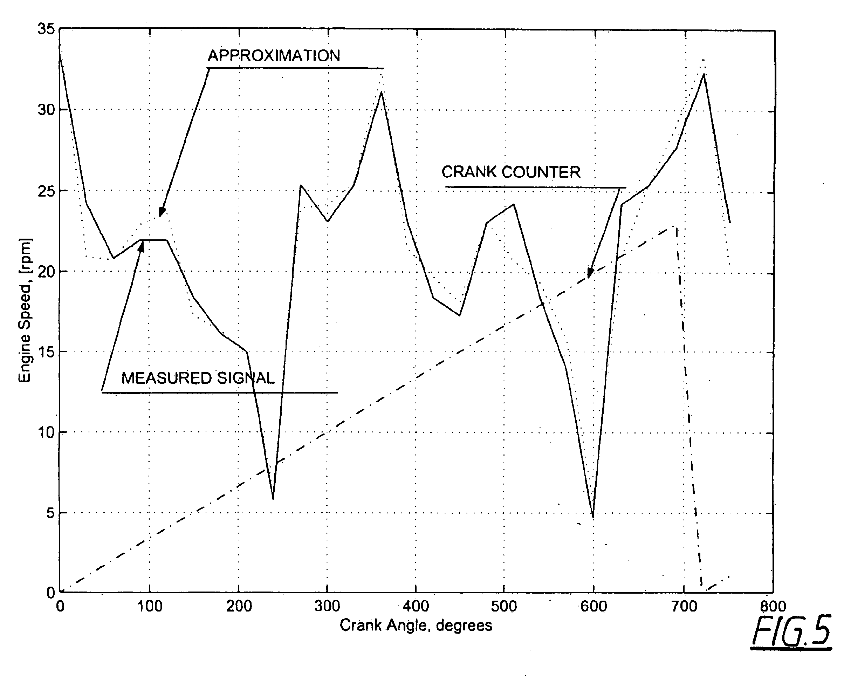

The verification results of the proposed above method are given in Figure 5. Algorithms (33) - (36) were tested at four frequencies involved with window size w = 12. The figure show measurements with the step 30 CA on the V8 engine. A single engine cycle is plotted. The engine speed is 4800 rpm and it is plotted with the solid line. Approximation of the measured signal by the trigonometric interpolation with a number of frequencies involved is plotted with dotted line.

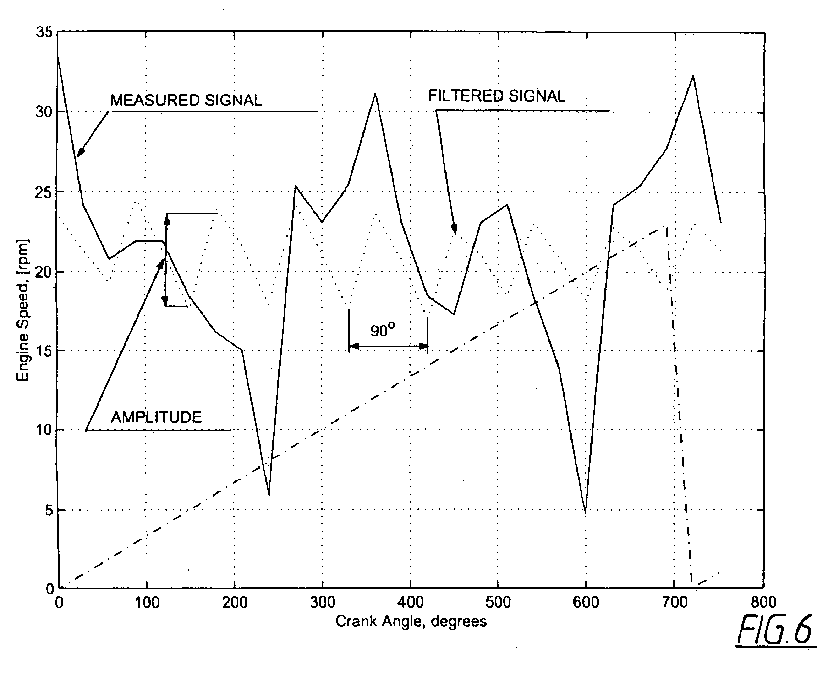

The verification results of the same algorithms at a combustion frequency only are given in Fig.6 Figure 6 show measurements with the step 30 CA on the V8 engine. A single engine cycle is plotted. The engine speed is 4800 rpm and it is plotted with the solid line. Filtered signal corresponding to the firing frequency is plotted with dotted line. The size of the moving window is equal to twelve (w = 12)

As can be seen from the Figure 5, the measured engine speed can be well approximated by the trigonometric interpolation method with the window moving in time. The signal filtered by the filter (37) is plotted in Fig. 6. As can be seen from the Figure, the amplitude information can be recovered from the filtered signal.

The method proposed above can also be applied to the Cam Profile Switching (CPS) diagnostics. The valve lift event can not be directly measured and special diagnostic algorithms based on indirect information about the valve lift, are required to identify a failure in the system. One of the CPS diagnostics method is based on the combustion state monitoring using fluctuations in the engine speed. The method is based on the fact that the combustion state is considerably changed during shifting (Schwarzenthal, 1999). This invention uses the technique of the combustion state monitoring via irregularities in the engine speed. The irregularities are associated with the CPS state. For high engine speeds, the information on engine speed irregularities is noise corrupted, and algorithms (33) - (36) can be used to recover the CPS state information.

A method of estimation of torque based on the trigonometric interpolation described above will be described in the following.

It is known, that the time rate change of the crankshaft angular velocity is proportional to the net torque acting on the system. The engine rotational dynamics can be described as follows

$$(38) \qquad J\dot{\omega}(t) = T_e - T_l$$

where w is the speed of an engine, J is the crankshaft inertia moment, $T_e$ is the torque of an engine produced by all cylinders at the time t, $T_1$ is the engine load torque. Equation (38) can be transformed into the crank angle domain using the chain rule of differentiation and employing the crank angle $\theta$ as an independent variable,

$$(39) \qquad \omega J \frac{\partial \omega}{\partial \theta} = T_e - T_l$$

Integrating over the the crank angle interval [$\theta_s$ $\theta_f$], where $\theta_s$ is the initial angle of the interval and $\theta_f$ is the final angle, where engine speed gets - minimal and maximal values, respectively, for a single cylinder, whose power stroke occurs in the interval, one gets

$$(40) \qquad \omega(\theta_f) - \omega(\theta_s) = \frac{1}{J\omega} \int_{\theta_a}^{\theta_f} (T_e - T_l) d\tau$$

Assuming that the torque is a continuous function at the interval [$\theta_s$ $\theta_f$], then there exists $\theta_1 \in [\theta_s\ \theta_f]$, such that the following holds

$$(41) \qquad \int_{\theta_s}^{\theta_f} (T_e - T_l) d\tau = (T_e(\theta_1) - T_l(\theta_1))(\theta_f - \theta_s)$$

Substituting (41) into ((40) the amplitude is defined as follows

$$(42) \qquad A_i = \omega(\theta_f) - \omega(\theta_s) = \frac{\theta_f - \theta_s}{J\omega}(T_e(\theta_1) - T_l(\theta_1))$$

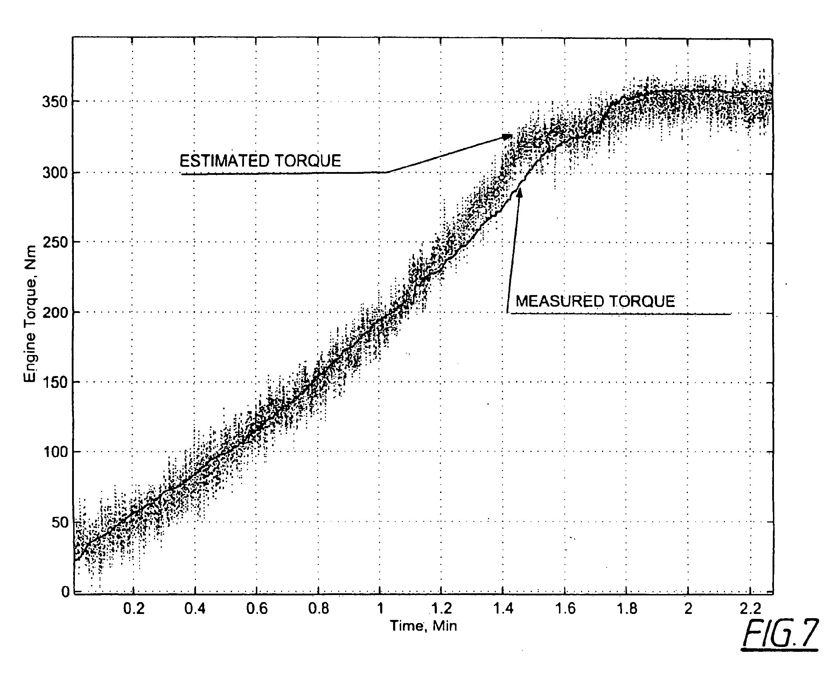

where $A_i$, i = 1,...N is the crankshaft speed fluctuation at the crank angle interval [$\theta_s$ $\theta_f$], where N is the number of the cylinders. This fluctuation $A_i$ is the measure of the net engine torque at the interval involved. Equation (42) allows to determine the average value of the torque produced by the cylinder, whose power stroke occurs in the interval. Amplitudes $A_i$ are averaged over a certain interval, typically for 10 - 15 events. The engine torque is estimated via the average amplitude $\overline{A}$. Figure 7 illustrates verification of proposed algorithms. The torque measured in a rig is plotted with the solid line and the estimated torque obtained by using the filtered signal (37) is plotted with dotted line. The figure shows measurements on the V8 engine. The engine speed is 4800 rpm. Measured engine torque is plotted with solid line. Estimated torque is plotted with dotted line.

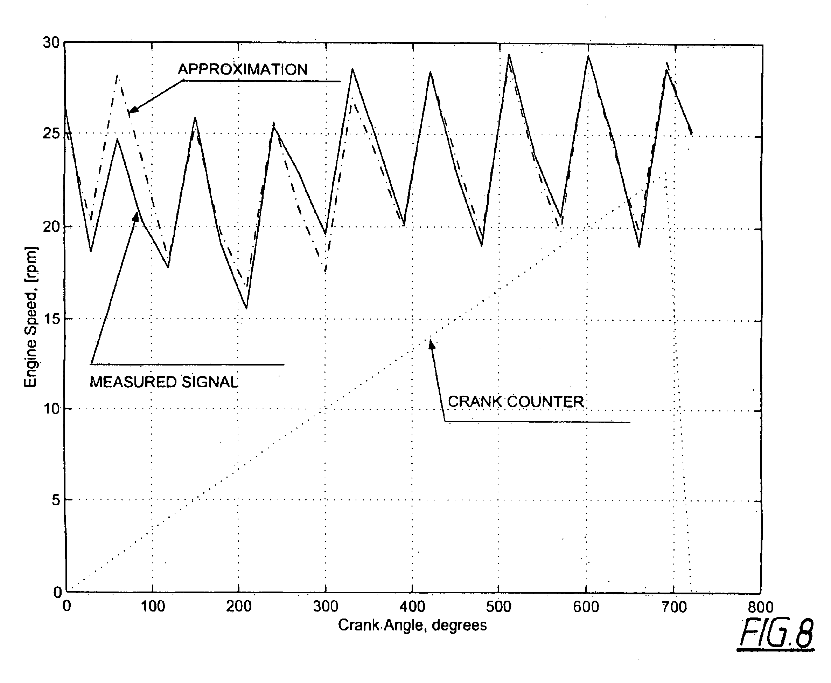

Figure 8 shows a good agreement between measured and estimated torques. The figure shows measurements with the step 30 CA on the V8 engine. A single engine cycle is plotted. The engine is operating on idle. The engine speed is 700 rpm and its high frequency component is plotted with the solid line. Approximation of the measured signal by the trigonometric interpolation at the combustion frequency is plotted with dash dotted line. The Crank Counter signal is plotted with dotted line.

In the following application of the trigonometric interpolation method in misfire diagnostics is described.

Misfire is the state of an engine where the combustion does not occur due to the errors in fuelling or ignition. In case with the misfire, unburned fuel and air are pumped into the catalyst, with increasing its temperature and causing damages. As a consequence, such misfires affect long term performance of the exhaust emission control system. The misfires cause changes in the crankshaft rate of rotation, because a misfired cylinder is not able to provide a torque. In order to detect a cylinder which is misfiring, the crankshaft circle of rotation is divided into the segments with the length

of $\dfrac{720}{N}$ CA degrees.

The time needed for the crankshaft to rotate through one segment under normal conditions (no misfire) is then calculated. In the case where this time is known, any apparent misfire may be detected by comparing the measured segment passage time with the reference time. The segment passage time becomes less as the rotational speed rises; thereby time interval errors rise that, in its turn, leads to the errors in the misfire detection. More frequent sampling, for example, at the rate (1) leads to the improvement of the misfire diagnostics function. However, at high engine speeds the misfires are hardly recognizable, since the signal of interest is noise contaminated.

The technique described above can be applied for the combustion quality monitoring functions, i.e., misfire diagnostics. Figure 8 shows the engine speed of the operating on idle healthy eightcylinder engine. The engine speed is filtered by the filter (37)

As it is shown in Figure 8, the engine speed can be well approximated by (37) in the case with healthy system.

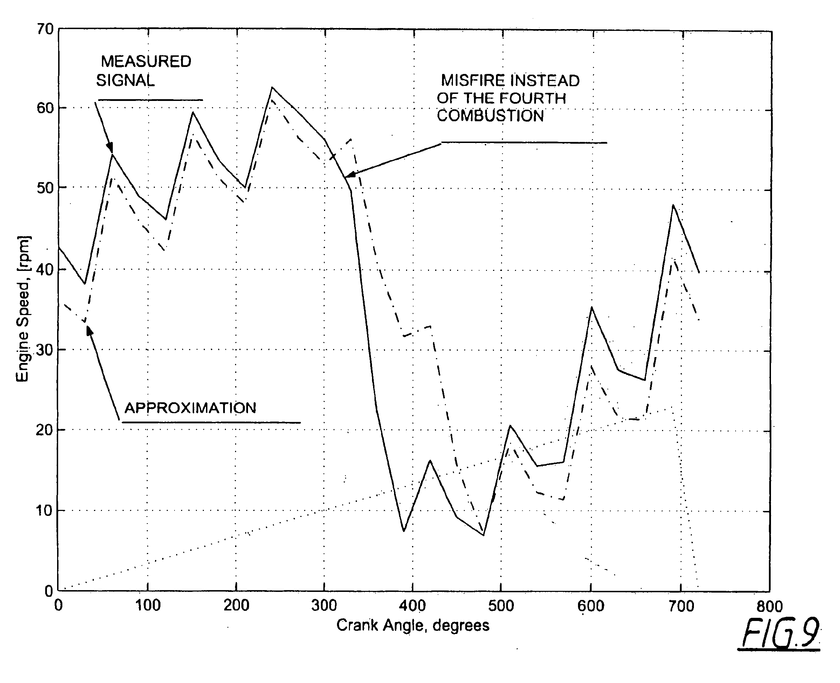

The high frequency component of the engine speed for a failed system where the misfire is generated in the third cylinder (instead of the fourth combustion), is plotted in Figure 9. The misfire is generated via a change of the multiplicative factor of the injection timing for the third cylinder. The figure show measurements with the step 30 CA on the V8 engine. A single engine cycle is plotted. The engine is operating on idle. The engine speed is 700 rpm and its high frequency component is plotted with the solid line. Approximation of the measured signal by the trigonometric interpolation at the combustion frequency is plotted with dash dotted line. The Crank Counter signal is plotted with dotted line. The size of the moving window is equal to 6, w = 6.

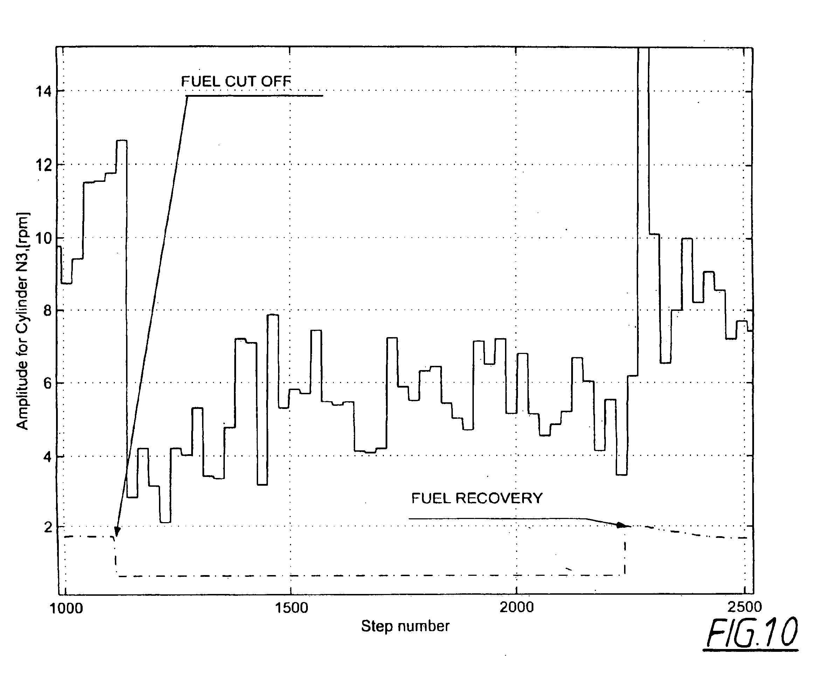

Figure 10 shows the amplitude (the difference between the extreme values) of the engine speed for misfiring at every cycle of the third cylinder, which is computed by using (42). The misfire is clearly recognizable on the filtered signal. The amplitude (the difference between maximal and minimal values) of the engine speed pulsation of the third cylinder) is plotted with the solid line as a function of step number. Each step is 30 CA. Fuel signal is plotted with dash dotted line. The fuel signal is a multiplicative factor to the injection timing signal for the third cylinder. The engine is operating on idle. The misfire is generated at every cycle.

As can be seen from the Figures 8 and 9 the engine speed can be well approximated by (37) both in the case of a healthy system and a failed one.

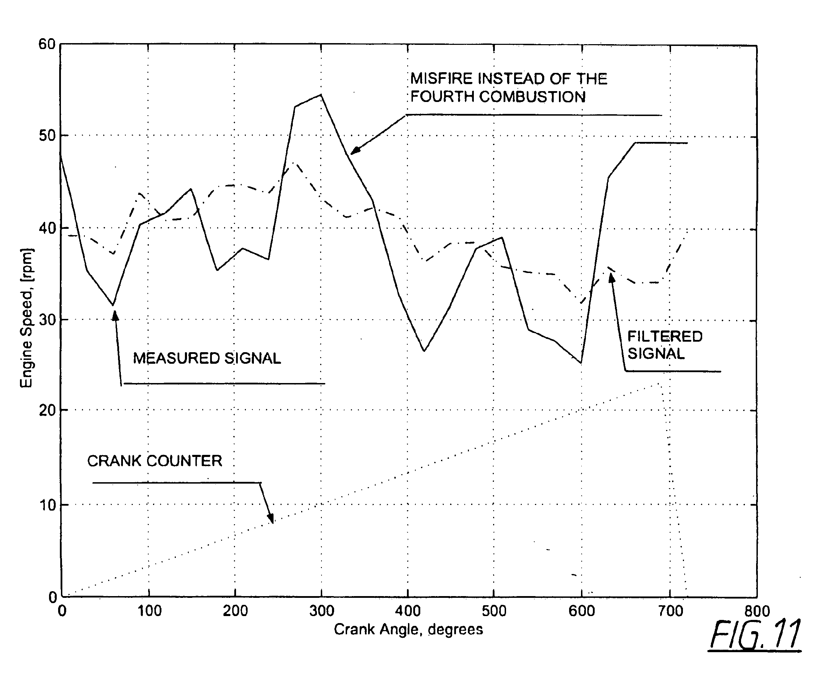

At low engine speeds the misfire can be detected by using an original signal also. However, at high and noisy engine speeds the original signal can not be used. Figure 11 shows the application of the trigonometric interpolation method for the detection of a misfire at high engine speed. The size of the moving window is w = 12. The figure shows measurements with the step 30 CA on the V8 engine. A single engine cycle is plotted. The engine speed is 5000 rpm and its high frequency component is plotted with the solid line. Approximation of the measured signal by the trigonometric interpolation at the combustion frequency is plotted with dash dotted line. The Crank Counter signal is plotted with dotted line. The size of the moving window is equal to 12, w = 12.

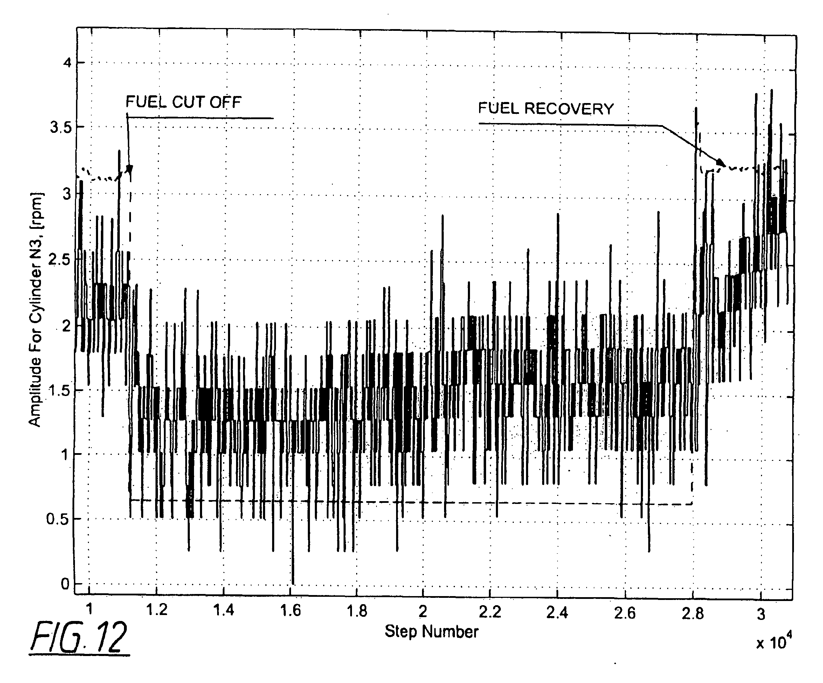

Figure 12 shows the amplitude for misfiring at every cycle third cylinder which is computed by using (42). Despite of the poor quality of the amplitude signal, the misfire is still recognizable via an amplitude drop. The amplitude (the difference between maximal and minimal values) of the engine speed pulsation for the third cylinder is plotted with the solid line as a function of step number. Each step is 30 CA. Fuel signal is plotted with dash dotted line. The engine is operating at 5000 rpm. The misfire is generated at every cycle.

Selection of the size of moving window w plays a significant role in the proposed method. Reduction of the window size makes the trigonometric interpolation more sensitive to the high frequency noise, thereby misfire is more clear recognizable by using (42). However, the valuable combustion quality information for nonmisfiring cylinders is noisy in this case. Enlarging the window size makes the interpolation more robust. However, the window of too large size causes misinterpretation of the misfire information, i.e., the combustion pulse appears on the filtered signal instead of the misfire drop. The window size w should chosen in such a way that both combustions in the nonmisfiring cylinders and misfire ought to be seen on the filtered signal. A restriction for the proper choice of the window size is condition (8). If condition (8) is violated, then the implementation of the trigonometric interpolation method requires matrix inversion, this in its turn, makes the method computationally expensive. For example, the window size w = 12 makes combustions for nonmisfiring cylinders recognizable (see Fig. 11), thereby the misfire is still recognizable via the drop of the corresponding amplitude (see Fig 12). The window size w = 6 gives larger drop in the amplitude due to misfire, however, the combustions for nonmisfiring cylinders are hardly recognizable. The choice of the window size between 6 and 12 violates the condition (8). The window size w = 12 is well suited for the estimation of the engine torque (see Figure 7).

As the consequence of the misfire event, a low frequency component appears in the engine speed signal. This fact can also be used for the misfire diagnostics. However, the method could cause misdetection during engine speed transients, which also involve a low frequency component in the engine speed signal.

The approximated engine speed (37) can be used in estimation of an engine angular acceleration. The acceleration can be estimated by evaluating a derivative of (37) analytically.

A modification of the Kacmarz algorithm is proposed for the misfire detection in the following Section which does not form part of the invention.

Another interesting approach to the filtering is based on the Kacmarz algorithm. Assume that there is a set of values $y_k$ measured at every step k. This signal should be approximated by following trigonometric polynomial:

$$(43) \qquad \hat{y}_k = a_{0k} + \sum_{i=1}^{n} (a_{ik} \cos(q_i x_k) + b_{ik} \sin(q_i x_k))$$

where $x_k$ is updated in terms of the crank angle with the step (1). The equation (43) plays a role of a model, which has to match the measured data $y_k$. The equation (43) can be written in the following way :

$$(44) \qquad \hat{y}_k = \varphi_k \theta$$

where

$$(45) \qquad \theta_k^T = [a_{0k}, a_{1k}, b_{1k}, a_{2k}, b_{2k}, a_{3k}, b_{3k}, \dots\dots, a_{nk}, b_{nk}]$$

$$(46) \qquad \varphi_k^T = [1, \cos(q_i x_k), \sin(q_i x_k), \cos(q_{2i} x_k), \sin(q2 x_k), \dots \cos(qn x_k), \sin(qn] x_k)$$

where $q_i$ i = 1, ... , n denotes the frequency.

Then, the estimation problem can be stated as follows: to find the update law $\theta_k$ such that the following equality holds at every step

$$(47) \qquad y_k = \varphi_k^T \theta_k$$

Consider the following adjustment law

$$(48) \qquad \theta_k = \theta_{k-1} + \frac{\varphi_k}{\varphi_k^T \varphi_k} (y_k - \theta_{k-1}^T \varphi_k)$$

By substituting (48) into the right hand side of the (47) it is easy to see that (47) is true. Notice, that $\varphi_k^T \varphi_k = n + 1$, where n is the number of frequencies involved and the adjustment law has a simple form, namely,

$$(49) \qquad \theta_k = \theta_{k-1} + \frac{\varphi_k}{n+1} (y_k - \theta_{k-1}^T \varphi_k)$$

Since the algorithm (49) guarantees exact approximation at every step, the estimates obtained by using this algorithm could be noisy. It is often necessary to smooth the estimates by introducing the adjustable gain matrix. For example, by using the least squares gain update matrix $\Gamma_k$, the algorithm (49) can be modified as follows:

$$(50) \qquad \theta_k = \theta_{k-1} + \frac{\Gamma_k \varphi_k}{n+1}(y_k - \theta_{k-1}^T \varphi_k)$$

$$(51) \qquad \Gamma = \Gamma_{k-1} - \frac{\Gamma_{k-1}\varphi_k\varphi_k^T\Gamma_{k-1} - \lambda_0(\Gamma_k + \frac{\Gamma_k^T\Gamma_k}{k_0})}{1 + \varphi_k^T\Gamma_{k-1}\varphi_k}$$

where $\Gamma_0 = \gamma I$, $\gamma > 0$, I is the unity matrix, $\lambda_0$, $k_0$ are the positive design parameters. For example, one can take $\gamma = 100$, $\lambda_0 = 2.5$, $k_0 = 10$. It is worthy to remark that the gain update law (51) is the discrete time analog of a continuous time algorithm described by Bartolini, Ferrara \& Stotsky (1995).

Algorithm (49) guarantees the exact approximation of the measured data at every step, but not convergence of the parameters $a_i$, i = 0,...,n to their true values. For the parameter convergence, the condition of the persistency of excitation of the input signal is needed.

Algorithm (49) can be combined with the trigonometric interpolation algorithms described in the previous Section. Estimates obtained by means of the trigonometric interpolation method can directly be used as a feedforward part for the algorithm (49). Introduction of the feedforward part speeds up the parameter convergence for the Kacmarz method.

Algorithms proposed above can be used in the case of the engine speed transients, provided that a slowly varying trend of the engine speed is properly compensated.

In the following application of the Kacmarz algorithm for diagnostics of misfire is disclosed which does not form part of the invention:

The filtered signal can be written as follows:

$$(52) \qquad \hat{\omega}_k = a_{0k} + a_{ck}\cos(q_c x_k) + b_{ck}\sin(q_c x_k)$$

where $q_c$ is the combustion frequency, and $a_{0k}$, $a_{ck}$, $b_{ck}$ are updated according to the (49).

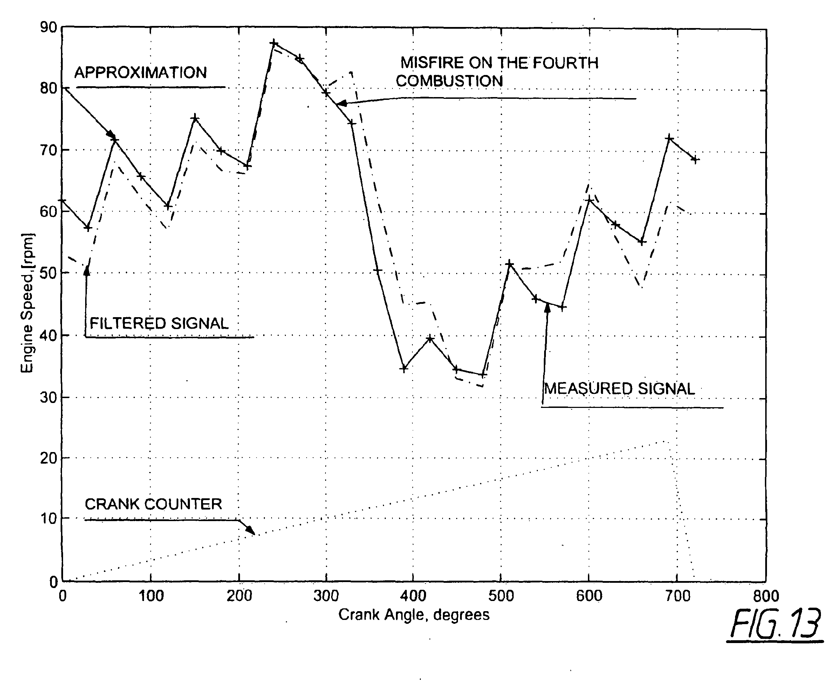

Figure 13 shows the properties of the algorithms (52) and (49). A V8 engine is operating on idle. It can be easily seen that the algorithm provides an exact approximation of the measured signal (see solid and plus lines). Misfire is easily recognizable on the filtered signal.

Figure 13 show measurements with the step 30 CA on the V8 engine. A single engine cycle is plotted. The engine is operating on idle. The engine speed is 700 rpm and its high frequency component is plotted with the solid line. Approximation of the measured signal by the Kacmarz algorithm with four frequencies involved is plotted with plus line. The output of the filter (52) is plotted with dash dotted line. The Crank Counter signal is plotted with dotted line.

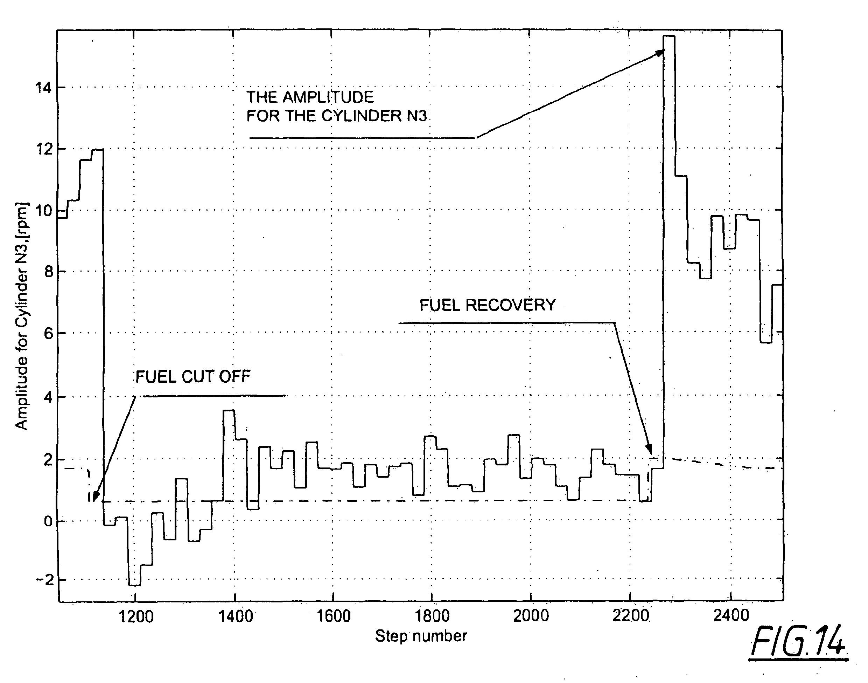

The amplitude (the difference between maximal and minimal values, (42)) of the pulsation of the engine speed for the third cylinder (the fourth combustion) calculated with the help of filtered signal (52) is plotted in Figure 14 as the function of a step number (each step is 30 CA degrees). The engine is operating on idle. Misfire is generated at every cycle by cutting off a fuel in the third cylinder. It can clearly be seen that the misfire is recognizable in the filtered signal.The amplitude (the difference between maximal and minimal values) of the engine speed pulsation for the third cylinder is plotted with the solid line as a function of step number. Each step is 30 CA. Fuel signal is plotted with dash dotted line. The engine is operating on idle. The engine speed is 700 rpm. The misfire is generated at every cycle.

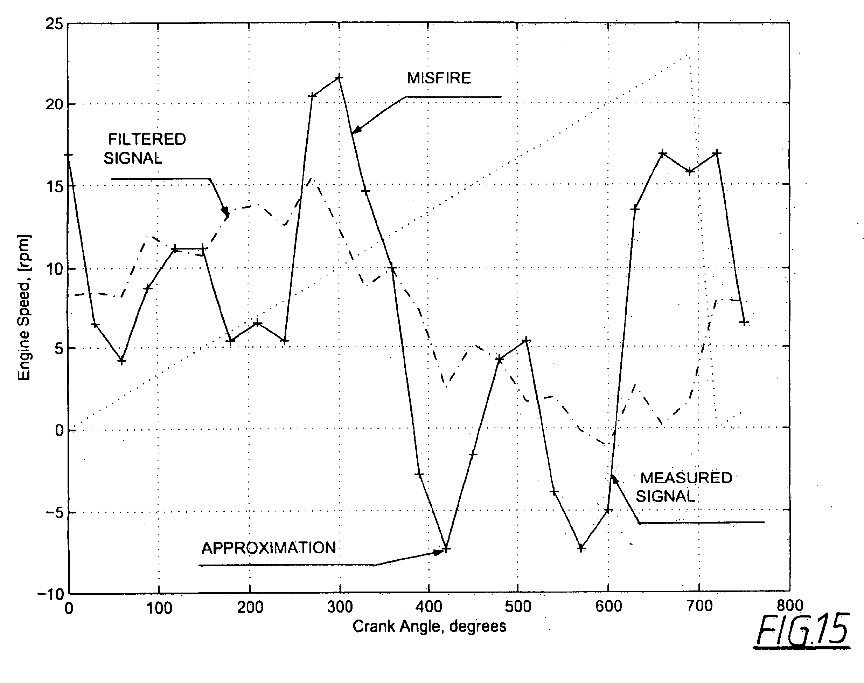

Figure 15 shows filtering results at the engine speed 5000 rpm. The measured signal is very noisy and it is filtered by the filter (52). It can clearly be seen, that combustions and misfire are recognized in the filtered signal.

Figure 15 shows measurements with the step 30 CA on the V8 engine. A single engine cycle is plotted. The engine speed is 5000 rpm and its high frequency component is plotted with the solid line. Approximation of the measured signal by the Kacmarz algorithm with four frequencies involved is plotted with plus line. The output of the filter (52) is plotted with dash dotted line. The Crank Counter signal is plotted with dotted line.

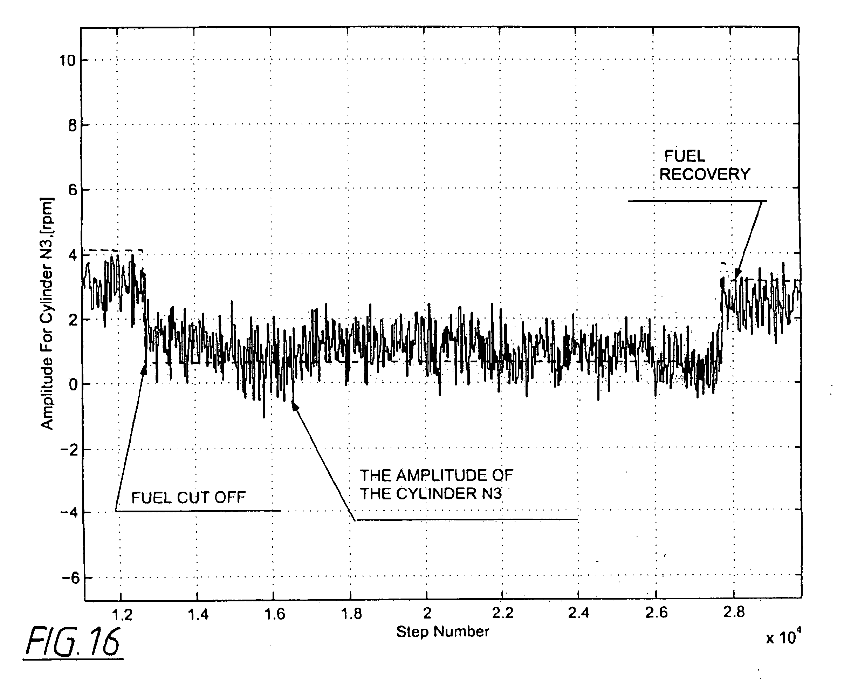

Amplitude of the speed fluctuations for the third cylinder which is misfiring at every cycle is shown in Figure 16. The amplitude (the difference between maximal and minimal values) of the engine speed pulsation for the third cylinder is plotted with the solid line as a function of step number. Each step is 30 CA. Fuel signal is plotted with dash dotted line. The engine is operating at 5000 rpm. The misfire is generated at every cycle.

By comparing Figures 9 with 13 and Figures 11 with 15, it is easy to see that the misfires are better recognizable by the Kacmarz technique. The trigonometric interpolation method is more suited for monitoring of the engine torque.

New computationally efficient algorithms, which provide filtering at the engine firing frequency and at high engine speeds where the combustion quality information is a highly noise contaminated are designed and verified. It is proved, that the torque estimation and misfire detection techniques benefit from the availablity of the combustion quality information provided by the algorithms proposed hereinabove.

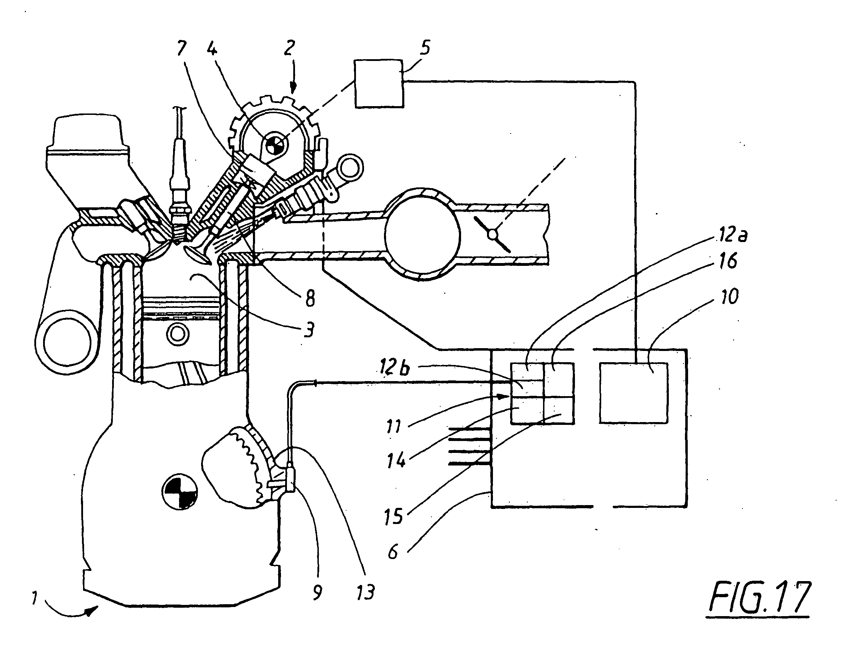

FIG. 17 shows in schematic form an internal combustion engine 1 which is provided with an evaluating device 11 constituting means for determining the variation of the engine speed according to the invention. The engine may be equipped with a variable valve control 2. The invention can also be used on engines which are not provided with a variable valve control 2.

Evaluating device 11 receives from crankshaft sensor 9 a signal corresponding to the angular position of crankshaft 8. In the present embodiment, this signal consists of a pulse train, with each pulse corresponding to a specific section of an angle swept by crankshaft 8. At a designated position of the crankshaft, a mark 13 is made that generates a special pulse and therefore makes it possible to determine the absolute position of the crankshaft.

The evaluating device 11 includes means 12 for assigning a trigonometric polynomial representing the engine speed. The trigonometric polynomial is expressed as a set of trigonometric functions, each trigonometric function being multiplied with a model coefficient. The means 12 for assigning a trigonometric polynomial therefore includes two memory areas, an array 12a representing a set of trigonometric base functions and a matrix 12b representing model coefficients to be determined.

The evaluating device further includes means 16 for retrieving a set of measurement data in a moving window of size w, where w is the number off measurement data being obtained in the window. The means 16 for retrieving measurement data receives data from the camshaft sensor. The data received corresponds to the crankshaft position $\theta$ at a given time t. The engine speed can be locally determined from the crankshaft position by using the first difference method.

Furthermore means 14 for interpolating said trigonometric polynomial to measurement data in a moving window of size w, by determining said model coefficients, are provided. The measurement data are stored in a third memory array 15. The model coefficients may be determined from matrix inversions of equations (5) - (7) or by use of the recursive formulas (30) - (32) in the event a starting value necessary for use of recursive calculations exists. A starting value may be obtained by matrix inversion of equations (30) - (32) or by use of a first set up estimate value of the model coefficients. The model coefficients are stored in the matrix 12b for later access for recursive calculation of model coefficients in later steps after having moved the window. The model coefficient may in another embodiment of the invention be determined by use of an adjustment law according to equation (49) or (50).

After having determined the model coefficients for the window at a step k, the window is moved by entering a new measurement data and rejecting a first measurement data in said window. After having moved the window the method steps (b) - (d) are repeated. In embodiment of the invention the model coefficients after moving said window are determined by recursive use of model coefficients determined in the step previous to moving the window.

All the different means included in the evaluating device 11 are constituted by programs running in a microcontroller having processing means and storage areas. The microcontroller is programmed to execute calculation of formulas (5) - (7), or (30) - (32) or (49) or (50) by use of information provided from the engine speed sensor 9.

In one embodiment on the invention the engine is equipped with a variable valve control 2. The variable valve control 2 is arranged to control gas exchange into or out from a plurality of cylinders 3 of the combustion engine 1 by selection of cam shaft profile of a cam shaft 4. The cam shaft 4 has a first cam having a first cam profile and a second cam having a second cam profile greater that said first cam profile, as will be described in further detail below. The variable valve control 2 includes an actuating device 5, which is controlled by an electronic control unit 6. The actuating device 5 manoeuvres the cam shaft in order to set which cam profile is currently is acting on lift mechanisms 7 for gas exchange valves 8. The variable valve control, which in the embodiment shown is arranged on the intake valve, can also be arranged on the exhaust valve.

The invention is also applicable for variable valve control 2 which is arranged to control the position of a camshaft 4, which is variable with respect to the angular position of a crankshaft 8 by means of an adjusting device.

The adjusting device 5 for change of camshaft mode is controlled by a valve control unit 10 arranged in the electronic control unit 6. The control is performed in a manner know to a person skilled in the art in order to provide switching of camshaft mode in dependence of engine operating condition.

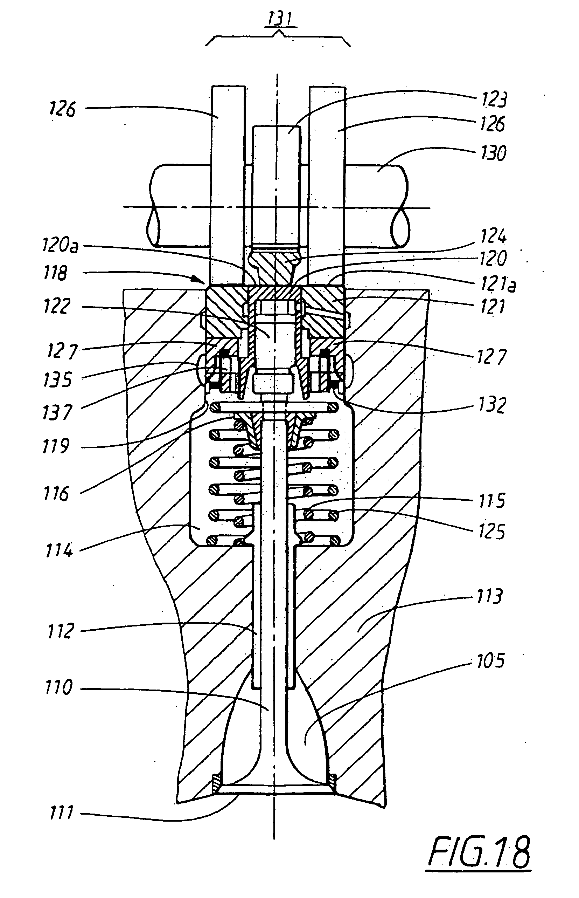

In figure 18 a valve assembly is shown, which may be used in connection with the invention in order to provide two different cam modes.

Referring to FIG. 18 there is shown a valve 110 having a head 111 which is movable in an axial direction to seal the passageway 105. The valve 110 is slidably mounted in a bore 112 in cylinder block 113 and passes through a cavity 114. In the cavity 114 around valve 110 there is located a spring 115 one end of which rests against a lower surface of said cavity 114 and the other end of which is located in a collar 116 mounted on the valve 110 so as to generally bias the valve 110 in an upwards direction.

Mounted on an upper end of valve 110 is a tappet assembly 118. The tappet assembly 118 comprises a co-axial inner tappet 120 and outer tappet 121. The inner tappet bears on a hydraulic lash adjustment element 122 of known type which in turn bears on the upper end of valve 110. The tappet assembly 118 is slidably mounted within bore 119 which extends from the cavity 114 to the upper surface of the cylinder block 113. A cylinder head cover may be positioned over and secured to the upper surface of the cylinder block 113.

Located above the cylinder block 113 is a rotatable camshaft 130, which is drivable in the usual arrangement 131, which comprises a pair of outer cam lobes 126 in between which is situated a central cam lobe 123. The central cam lobe 123 has a profile designed to optimise engine performance over a selected portion of engine speed and load range. Although the central cam lobe 123 is illustrated as having a generally eccentric form it is envisaged that this cam lobe can be a circular form allowing valve deactivation while under control of this cam lobe. The outer cam lobes 126 are of a substantial identical profile to each other and are designed to optimise engine performance over another portion of engine speed and load range.

The camshaft 130 is located such that in low speed conditions an upper surface 120a of the inner tappet 120 is driven by the central cam lobe via finger follower 124. The upper surface 121 a of outer tappet 121 is kept in contact with the outer cam lobes 126 by means of a spring 125 which is co-axially positioned around spring 115 and which locates at one end in recesses 132 in the lower end surface of outer tappet 121. At its lower end spring 125 bears on the lower surface of cavity 114

Cam profile selection is achieved by either connecting the inner tappet 120 and outer tappet 121 so that they move together which allows the outer tappet 121 and outer cam lobes 126 to control the valve 110 or by disconnecting the inner tappet 120 and outer tappet 121, which allows the inner tappet 120 and inner cam lobe 123 to control valve 110.

The invention is not restricted to the embodiments described hereinabove and is only limited by the scope of the appended claims. The invention particularly relates to method for determination of variation of engine speed based on interpolation of a trigonometric polynomial using a recursive formula.

**Claims**

1. Method for determining the variation of engine speed, wherein the method includes the following method steps:

   - (a) assigning a trigonometric polynomial representing the engine speed, said trigonometric polynomial being expressed as a set of trigonometric functions, each trigonometric function being multiplied with a model coefficient,
   - (b) retrieving a set of measurement data in a moving window of size w, where w is the number of measurement data being obtained in the window,
   - (c) interpolating said trigonometric polynomial to a moving window of size w, by determining said model coefficients,
   - (d) moving the window by entering a new measurement data and rejecting a first measurement data in said window, and
   - repeating method steps (b) - (d)

   **characterised in that** said model coefficients after moving said window are determined by recursive use of model coefficients determined in a step previous to moving the window.

2. Method according to claim 1, **characterised in that** said trigonometric polynomial being is a set of trigonometric functions of increasing order of the discretisation step and a constant value.

3. Method according to claim 1, **characterised in that** said trigonometric polynomial is expressed as follows:

$$a_{0k} + \sum_{q=1}^{n}(a_{qk}\cos(cq(w-1)\Delta + (b_{qk}\sin(cq(w-1)\Delta)),$$

   where $n \geq 1$ is the number of different orders of trigonometric functions used in the trigonometric polynomial; c is the base frequency; $\Delta$ is the discretisation step; and $a_{0k}$, $a_{qk}$ and $b_{qk}$ are the model coefficients for q = 1....n .

4. Method according to claim 1, **characterised in that** said base frequency is chosen as the combustion frequency, that is c=N$\pi$/360, where N is the number of engine cylinders.

**5.** Method according to any of claims 1 - 4, **characterised in that** said model coefficients are a function of a measurement data entering the window, a measurement data leaving the window and the model coefficients determined in the step previous to moving the window.

**6.** Method according to claim 4, **characterised in that** the model coefficients are updated as follow:

$$a_{0k} = a_{0(k-1)} + \frac{1}{w}(y(w+1) - y(1))$$

$$a_{qk} = \frac{2}{w}y(w+1)\cos((w-1)cq\Delta) + \cos(cq\Delta)(a_{q(k-1)} - \frac{2}{w}y(1))$$
$$+ \sin(cq\Delta)b_{q(k-1)}$$

$$b_{qk} = \frac{2}{w}y(w+1)\sin((w-1)cq\Delta) + \cos(cq\Delta)(b_{q(k-1)} - \frac{2}{w}y(2)\sin(cq\Delta))$$
$$- \sin(cq\Delta)a_{q(k-1)} - \frac{2}{w}(y(1) + y(2)\cos(cq\Delta))$$

**7.** Method according to any of claims 3 - 6, **characterised in that** only the first order of trigonometric function is chosen, that is the parameter q is set to be equal to 1.

**8.** Method according to any of claims 3 - 6, **characterised in that** the parameter q is set to include the combustion frequency, low powertrain frequencies and high crankshaft torsion frequencies.

**9.** Method according to any of the preceding claims, **characterised in that** a cam profile shifting is detected by detecting a change in the combustion state occurring as a change in the engine speed, said change in engine speed being reflected in the model coefficient of said trigonometric polynomial.

**10.** Detection of misfire by use of the following steps

- determination of the engine speed in by use of a method as disclosed in any of claims 1-8 ;
- determination of an amplitude Ai being a measure of the net engine torque from a cylinder as the difference between the maximal and minimal values of the determined engine speed; detecting misfire by noting a drop in said amplitude.

**11.** Method according to claim 10, **characterised in that** said net engine torque at a crank angle interval $[\theta_s \ \theta_f]$ is estimated by use of the trigonometric polynomial representing the engine speed.

**12.** Method according to claim 11, **characterised in that** said amplitude Ai is defined as:

$$A_i = \frac{\theta_f - \theta_s}{J\omega}(T_e(\theta_1) - T_l(\theta_1)),$$

where $T_e$ is the torque produced by all cylinder in the interval and $T_1$ is the engine load torque.

**Patentansprüche**

**1.** Verfahren zum Bestimmen der Motordrehzahlschwankung, wobei das Verfahren die folgenden Verfahrensschritte umfasst:

(a) Zuordnen eines trigonometrischen Polynoms, das die Motordrehzahl darstellt, wobei das trigonometrische Polynom als eine Menge trigonometrischer Funktionen, jede trigonometrische Funktion mit einem Modellkoeffizienten multipliziert, ausgedrückt wird,

(b) Abrufen einer Menge von Messdaten in einem Moving-Window der Größe w, wobei w die Anzahl von Messdaten ist, die in dem Fenster erhalten wird,

(c) Interpolieren des trigonometrischen Polynoms zu einem Moving-Window der Größe w durch Bestimmen der Modellkoeffizienten,

(d) Bewegen des Fensters durch Eingeben neuer Messdaten und Verwerfen der ersten Messdaten in dem Fenster und Wiederholen der Schritte (b) bis (d),

und **dadurch gekennzeichnet ist, dass** die Modellkoeffizienten, nach dem Bewegen des Fensters, durch rekursive Verwendung von Modellkoeffizienten bestimmt werden, die in einem Schritt vor dem Bewegen des Fensters bestimmt wurden.

2. Verfahren nach Anspruch 1, **dadurch gekennzeichnet, dass** das bestehende trigonometrische Polynom eine Menge trigonometrischer Funktionen steigender Ordnung des Diskretisierungsschrittes und eines festen Wertes ist.

3. Verfahren nach Anspruch 1, **dadurch gekennzeichnet, dass** das trigonometrische Polynom wie folgt ausgedrückt wird:

$$a_{0k} + \sum_{q=1}^{n} (a_{qk} \cos(cq(w-1)\Delta + (b_{qk} \sin(cq(w-1)\Delta)).$$

wobei $n \geq 1$ die Anzahl verschiedener Ordnungen von trigonometrischen Funktionen ist, die in dem trigonometrischen Polynom verwendet werden, c die Basisfrequenz ist, $\Delta$ der Diskretisierungsschritt ist und $a_{0k}$, $a_{qk}$ und $b_{qk}$ die Modellkoeffizienten für q = 1 ... n sind.

4. Verfahren nach Anspruch 1, **dadurch gekennzeichnet, dass** die Basisfrequenz als die Verbrennungsfrequenz gewählt wird, d. h., c = $N_{TT}$/360, wobei N die Anzahl von Motorzylindern ist.

5. Verfahren nach einem der Ansprüche 1 bis 4, **dadurch gekennzeichnet, dass** die Modellkoeffizienten eine Funktion von Messdaten, die in das Fenster einfliessen, Messdaten, die das Fenster verlassen, und den in dem Schritt vor dem Bewegen des Fensters bestimmten Modellkoeffizienten sind.

6. Verfahren nach Anspruch 4, **dadurch gekennzeichnet, dass** die Modellkoeffizienten wie folgt aktualisiert werden:

$$a_{0k} = a_{0(k-1)} + \frac{1}{w}(y(w+1) - y(1))$$

$$a_{qk} = \frac{2}{w} y(w+1) \cos((w-1)cq\Delta) + \cos(cq\Delta)(a_{q(k-1)} - \frac{2}{w} y(1)) + \sin(cq\Delta)b_{q(k-1)}$$

$$b_{qk} = \frac{2}{w} y(w+1) \sin((w-1)cq\Delta) + \cos(cq\Delta)(b_{q(k-1)} - \frac{2}{w} y(2)\sin(cq\Delta)) - \sin(cq\Delta)a_{q(k-1)} - \frac{2}{w}(y(1) + y(2)\cos(cq\Delta))$$

**7.** Verfahren nach einem der Ansprüche 3 bis 6, **dadurch gekennzeichnet, dass** nur die trigonometrische Funktion erster Ordnung ausgewählt wird, d. h., dass der Parameter q eingerichtet wird, um gleich 1 zu sein.

**8.** Verfahren nach einem der Ansprüche 3 bis 6, **dadurch gekennzeichnet, dass** der Parameter q festgelegt ist, um die Verbrennungsfrequenz, niedrige Antriebsfrequenzen und hohe Kurbelwellentorsionsfrequenzen zu enthalten.

**9.** Verfahren nach einem der vorhergehenden Ansprüche, **dadurch gekennzeichnet, dass** Veränderung des Nokkenprofils durch Detektieren einer Änderung in dem Verbrennungszustand, die als eine Änderung der Motordrehzahl auftritt, detektiert wird, wobei sich die Änderung der Motordrehzahl in dem Modellkoeffizienten des trigonometrischen Polynoms zeigt.

**10.** Detektieren von Fehlzündung unter Verwendung der folgenden Schritte:

- Bestimmen der Motordrehzahl unter Verwendung eines Verfahrens, wie in einem der Ansprüche 1 bis 8 offenbart,
- Bestimmen einer Amplitude Ai, die ein Maß des Nettomotordrehmoments von einem Zylinder als die Differenz zwischen dem Maximal- und dem Minimalwert der bestimmten Motordrehzahl ist, und Detektieren von Fehlzündung durch Bemerken eines Abfalls der Amplitude.

**11.** Verfahren nach Anspruch 10, **dadurch gekennzeichnet, dass** das Nettomotordrehmoment bei einem Kurbelwinkelintervall $(\theta_s \ \theta_f)$ unter Verwendung des trigonometrischen Polynoms, das die Motordrehzahl darstellt, geschätzt wird.

**12.** Verfahren nach Anspruch 11, **dadurch gekennzeichnet, dass** die Amplitude Ai definiert ist als:

$$A_i = \frac{\theta_f - \theta_s}{J\omega}(T_e(\theta_f) - T_l(\theta_s)),$$

wobei $T_e$ das durch alle Zylinder in dem Intervall erzeugte Drehmoment ist und $T_1$ das Motorlastdrehmoment ist.

**Revendications**

**1.** Procédé permettant de déterminer la variation de régime du moteur, dans lequel le procédé inclut les étapes de procédé suivantes :

- (a) l'attribution d'un polynôme trigonométrique représentant le régime du moteur, ledit polynôme trigonométrique étant exprimé comme un ensemble de fonctions trigonométriques, chaque fonction trigonométrique étant multipliée par un coefficient de modèle,
- (b) récupération d'un ensemble de données de mesure dans une fenêtre mobile de taille w, où w est le nombre de données de mesure obtenues dans la fenêtre,
- (c) interpolation dudit polynôme trigonométrique dans une fenêtre mobile de taille w, en déterminant lesdits coefficients de modèles,
- (d) déplacement de la fenêtre en entrant de nouvelles données de mesure et en rejetant des premières données de mesure dans ladite fenêtre, et
- répétition des étapes de procédé (b) à (d),

**caractérisé en ce que** lesdits coefficients de modèles, suite au déplacement de ladite fenêtre, sont déterminés grâce à une utilisation récursive des coefficients de modèles déterminés dans une étape préalable au déplacement de la fenêtre.

**2.** Procédé selon la revendication 1, **caractérisé en ce que** ledit polynôme trigonométrique est un ensemble de fonctions trigonométriques d'ordre croissant de l'étape de discrétisation et d'une valeur constante.

**3.** Procédé selon la revendication 1, **caractérisé en ce que** ledit polynôme trigonométrique est exprimé comme suit :

$$a_{0k} + \sum_{q=1}^{n} \left( a_{qk} \cos\left( cq(w-1)\Delta + (b_{qk} \sin(cq(w-1)\Delta) \right) \right),$$

où $n \geq 1$ est le nombre d'ordres différents de fonctions trigonométriques utilisées dans le polynôme trigonométrique ; c est la fréquence de base ; $\Delta$ est l'étape de discrétisation ; et $a_{0k}$, $a_{qk}$ et $b_{qk}$ sont les coefficients de modèles pour $q = 1...n$.

**4.** Procédé selon la revendication 1, **caractérisé en ce que** ladite fréquence de base est choisie comme fréquence de combustion, qui est $c = N\pi/360$, où N est le nombre de cylindres du moteur.

**5.** Procédé selon l'une quelconque des revendications 1 à 4, **caractérisé en ce que** lesdits coefficients de modèles dépendent des données de mesure entrant dans la fenêtre, une donnée de mesure quittant la fenêtre et les coefficients de modèles déterminés dans l'étape préalable au déplacement de la fenêtre.

**6.** Procédé selon la revendication 4, **caractérisé en ce que** les coefficients de modèles sont mis à jour comme suit :

$$a_{0k} = a_{0(k-1)} + \frac{1}{w}(y(w+1) - y(1))$$

$$a_{qk} = \frac{2}{w} y(w+1) \cos((w-1)cq\Delta) + \cos(cq\Delta)(a_{q(k-1)} - \frac{2}{w} y(1)) + \sin(cq\Delta)b_{q(k-1)}$$

$$b_{qk} = \frac{2}{w} y(w+1) \sin((w-1)cq\Delta) + \cos(cq\Delta)(b_{q(k-1)} - \frac{2}{w} y(2)\sin(cq\Delta)) - \sin(cq\Delta)a_{q(k-1)}$$

$$- \frac{2}{w}(y(1) + y(2)\cos(cq\Delta))$$

**7.** Procédé selon l'une quelconque des revendications 3 à 6, **caractérisé en ce que** seul le premier ordre de fonction trigonométrique est sélectionné, c'est-à-dire que le paramètre q est établi pour être égal à 1.

**8.** Procédé selon l'une quelconque des revendications 3 à 6, **caractérisé en ce que** le paramètre q est établi pour inclure la fréquence de combustion, des fréquences de faible transmission et des fréquences de torsion de vilebrequin élevées.

**9.** Procédé selon l'une quelconque des revendications précédentes, **caractérisé en ce qu'**un changement de manche de profil de came est détecté en détectant l'apparition d'un changement de l'état de combustion comme changement du régime du moteur, ledit changement du régime du moteur étant reflété dans le coefficient de modèle dudit polynôme trigonométrique.

**10.** Détection d'un défaut d'allumage grâce à l'utilisation des étapes suivantes :

- détermination du régime du moteur grâce à l'utilisation d'un procédé tel que décrit dans l'une quelconque des revendications 1 à 8 ;
- détermination d'une amplitude Ai étant une mesure du couple moteur net à partir d'un cylindre comme la différence entre les valeurs maximale et minimale du régime du moteur déterminé ;
- détection du défaut d'allumage grâce à l'indication d'une chute de ladite amplitude.

**11.** Procédé selon la revendication 10, **caractérisé en ce que** ledit couple moteur net au niveau d'un intervalle d'angle du vilebrequin $[\theta_s\ \theta_f]$ est estimé grâce à l'utilisation du polynôme trigonométrique représentant le régime du moteur.

**12.** Procédé selon la revendication 11, **caractérisé en ce que** ladite amplitude Ai est définie comme suit :

$$A_i = \frac{\theta_f - \theta_s}{J\omega}(T_e(\theta_1) - T_1(\theta_1)),$$

où $T_e$ est le couple produit par l'ensemble du cylindre dans l'intervalle et $T_1$ est le couple de charge du moteur.

FIG.1

FIG.2

FIG.3

EP 1 559 898 B1

FIG.4

EP 1 559 898 B1

FIG.5

EP 1 559 898 B1

EP 1 559 898 B1

*FIG.6*

FIG.7

FIG.8

EP 1 559 898 B1

FIG.9

EP 1 559 898 B1

FIG.10

EP 1 559 898 B1

FIG.11

MISFIRE INSTEAD OF THE
FOURTH COMBUSTION

MEASURED SIGNAL

FILTERED
SIGNAL

CRANK COUNTER

Engine Speed, [rpm]

Crank Angle, degrees

EP 1 559 898 B1

32

FIG.12

FIG.13

FIG.14

EP 1 559 898 B1

FIG.15

FIG. 16

EP 1 559 898 B1

FIG.17

FIG.18

**EP 1 559 898 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5862507 A
- US 20030167118 A1
- US 6029109 A
- US 6223120 B
- US 6234010 B
- US 6006152 A
- DE 10123022 A
- US 5734100 A
- US 5906652 A
- US 5771482 A

**Non-patent literature cited in the description**

- **GINOUX S. ; CHAMPOUSSIN J.C.** *ngine Torque Determination by Crankangle Measurements: State of the Art, Future Prospects , Electronic Engine Controls,* 1997, vol. 1997, 1236
- **STOTSKY A. ; FORGO A.** Recursive Spline Interoplation Method for Real Time Engine Control Applications. *Control Engineering Practice,* 2003